# EUROPEAN PATENT APPLICATION

(11) **EP 3 188 047 A1**
(43) Date of publication of application: **05.07.2017**
(21) Application number: 16204521.5
(22) Date of filing: 15.12.2016
(51) Int. Cl.: G06F 17/30, G06F 9/44

(54) **METHOD AND DEVICE FOR LANGUAGE SETTINGS**

(30) Priority: 29.12.2015 CN 201511017747; 17.08.2016 CN 201610681553
(71) Applicant: Beijing Xiaomi Mobile Software Co., Ltd., Beijing 100085 (CN)
(72) Inventor: ZHU, Wenbo, Beijing, 100085 (CN); YU, Wei, Beijing, 100085 (CN); SONG, Jianing, Beijing, 100085 (CN)
(74) Representative: Cougard, Jean-Marie

(57) **Abstract**

The present disclosure provides a method and a device for language settings, and generally relates to the technical field of computer technology. The method includes: obtaining (101) current geographic location information of an electronic device; extracting (102) at least one language associated with the geographical location information from a predefined language list; and inserting (103) the at least one language into a specified position in the predefined language list. When a language option is set by a subsequent user, the electronic device can directly provide the at least one language to the user, and the user can search the language list to obtain the at least one language associated with the current geographic location information without scrolling the language list up and down, and directly select one of the at least one language as a setting result for the language option of the electronic device, which facilitates the user to set languages.

## Description

### FIELD

The present disclosure generally relates to the technical field of computer technology, and more particularly to a method and a device for language settings.

### BACKGROUND

With the development of import and export trade, electronic devices produced by one country may be used by users from another country. When the language used by a user from another country is different with the language used by the country where the electronic device was produced, the user needs to set the language of the electronic device.

### SUMMARY

In order to overcome problems in the related technologies, the present disclosure provides a method and a device for language settings.

According to a first aspect of the embodiments of the present disclosure, a method for language settings is provided, the method being implemented by an electronic device, wherein the method comprises: obtaining current geographic location information of an electronic device; extracting at least one language which is associated with the geographic location information from a predefined language list; and inserting the at least one language into a specified position in the predefined language list.

In a particular embodiment, the method further comprises: displaying, on a current interface of the electronic device, the at least one language which is in the specified position; and receiving language setting information and selecting a language indicated therein as a setting result for a language option of the electronic device.

In a particular embodiment, the inserting the at least one language into a specified position in the predefined language list comprises: obtaining popularity of the at least one language; ranking the at least one language by the popularity in descending order; and inserting the ranked at least one language into the specified position in the predefined language list.

In a particular embodiment, the method further comprises: obtaining geographic location information previously obtained and restoring at least one language, which is associated with the previously obtained geographic location information, from the specified position to a respective original position, to obtain the predefined language list; or reading the predefined language list which is pre-stored in the electronic device and remains unchanged.

In a particular embodiment, the extracting at least one language which is associated with the geographic location information from a predefined language list comprises: reading a country code of the geographic location information from a system property of the electronic device; and querying a predefined corresponding relationship for at least one language corresponding to the country code, wherein the predefined corresponding relationship is used for storing a corresponding relationship between a language and a country code.

In a particular embodiment, the obtaining current geographic location information of an electronic device comprises: obtaining a setting result for a region option of the electronic device, and selecting geographic location information indicated in the setting result as the current geographic location information of the electronic device; or obtaining geographic location information indicated by a subscriber identification module (SIM) card in the electronic device, and selecting the geographic location information indicated by the SIM card as the current geographic location information of the electronic device; or obtaining geographic location information indicated in network information which is registered by the electronic device, and selecting the geographic location information indicated in the network information as the current geographic location information of the electronic device; or obtaining geographic location information using a global positioning system (GPS), and selecting the geographic location information obtained by the GPS as the current geographic location information of the electronic device.

In a particular embodiment, if the current geographic location information of the electronic device is the setting result for the region option of the electronic device, the method further comprises: receiving region setting information, and selecting a region indicated in the region setting information as the setting result for the region option; and triggering a performance of obtaining the current geographic location information of the electronic device.

In a particular embodiment, if the current geographic location information of the electronic device is the setting result for the region option of the electronic device, the method further comprises: receiving region setting information, and selecting a region indicated in the region setting information as the setting result for the region option; and receiving a trigger operation for a language option, and triggering a performance of obtaining the current geographic location information of the electronic device according to the trigger operation.

In a particular embodiment, the method further comprises: selecting one of the at least one language as the setting result for the language option of the electronic device when it is booted for the first time.

In a particular embodiment, the steps of the method for language settings according to the first aspect as defined above are determined by computer program instructions.

According to a second aspect of the embodiments of the present disclosure, a method for language settings is provided, wherein the method is implemented by an electronic device, said method comprising: obtaining current geographic location information of an electronic device when it is booted for the first time; determining at least one language which is associated with the geographic location information from a predefined language list of the electronic device; and selecting one of the at least one language as a setting result for a language option of the electronic device.

In a particular embodiment, the steps of the method for language settings according to the second aspect as defined above are determined by computer program instructions.

Consequently, the invention is also directed to a computer program for executing the steps of a method for language settings as defined by anyone of the first and second aspect when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a third aspect of the embodiments of the present disclosure, an electronic device for language settings is provided, comprising: an information obtainment module configured to obtain current geographic location information of the electronic device; a language extraction module configured to extract at least one language from a predefined language list, wherein the at least one language is associated with the geographic location information obtained by the information obtainment module; and a language insertion module configured to insert the at least one language which is extracted by the language extraction module into a specified position in the predefined language list.

In a particular embodiment, the device further comprises: a display module configured to display, on a current interface of the electronic device, the at least one language in the specified position determined by the language insertion module; and a first setting module configured to receive language setting information, and select a language indicated in the language setting information as a setting result for a language option of the electronic device.

In a particular embodiment, the language insertion module comprises: an obtainment sub-module configured to obtain popularity of the at least one language; a ranking sub-module configured to rank the at least one language by the popularity obtained by the obtainment sub-module in descending order; and an insertion sub-module configured to insert the at least one language, which is ranked by the ranking sub-module, into the specified position in the predefined language list.

In a particular embodiment, the device further comprises: a list obtainment module configured to obtain geographic location information previously obtained and restore the at least one language, which is associated with the geographic location information previously obtained, from the specified position to a respective original position, to obtain the predefined language list; or read the predefined language list which is pre-stored in the electronic device and remains unchanged.

In a particular embodiment, the language extraction module comprises: a read sub-module configured to read a country code of the geographic location information from a system property of the electronic device; and a query sub-module configured to query a predefined corresponding relationship for the at least one language corresponding to the country code read by the read sub-module, wherein the predefined corresponding relationship is used for storing a corresponding relationship between a country code and a language.

In a particular embodiment, the information obtainment module comprises: a first obtainment sub-module configured to obtain a setting result for a region option of the electronic device, and select geographic location information indicated in the setting result as the current geographic location information of the electronic device; or a second obtainment sub-module configured to obtain geographic location information indicated by a subscriber identification module (SIM) card in the electronic device, and select the geographic location information indicated by the SIM card as the current geographic location information of the electronic device; or a third obtainment sub-module configured to obtain geographic location information indicated in network information which is registered by the electronic device, and select the geographic location information indicated in the network information as the current geographic location information of the electronic device; or a fourth obtainment sub-module configured to obtain geographic location information using a global positioning system (GPS), and select the geographic location information obtained by the GPS as the current geographic location information of the electronic device.

In a particular embodiment, if the current geographic location information of the electronic device is the setting result for the region option of the electronic device, the device further comprises: a first reception module configured to receive region setting information, and select a region indicated in the region setting information as the setting result for the region option; and a first jump module configured to trigger the information obtainment module to obtain the current geographic location information of the electronic device.

In a particular embodiment, if the current geographic location information of the electronic device is the setting result for the region option of the electronic device, the device further comprises: a second reception module configured to receive region setting information, and select a region indicated in the region setting information as the setting result for the region option; and a second jump module configured to receive a trigger operation for a language option, and trigger the information obtainment module to obtain the current geographic location information of the electronic device according to the trigger operation.

In a particular embodiment, the device further comprises: a second setting module configured to select one of the at least one language as the setting result for the language option of the electronic device when it is booted for the first time.

According to a fourth aspect of the embodiments of the present disclosure, a device for language settings is provided, comprising: an obtainment module configured to obtain current geographic location information of an electronic device when it is booted for the first time; a determination module configured to determine, from a predefined language list of the electronic device, at least one language which is associated with the geographic location information obtained by the obtainment module; and a setting module configured to select one of the at least one language determined by the determination module, as a setting result for a language option of the electronic device.

According to a fifth aspect of the embodiments of the present disclosure, a device for language settings is provided, comprising: a processor; a memory for storing processor-executable instructions; wherein the processor is configured to: obtain current geographic location information of an electronic device; extract, from a predefined language list, at least one language which is associated with the geographic location information; and insert the at least one language into a specified position in the predefined language list.

According to a sixth aspect of the embodiments of the present disclosure, a device for language settings is provided, comprising: a processor; a memory for storing processor-executable instructions; wherein the processor is configured to: obtain current geographic location information of an electronic device when it is booted for the first time; determine, from a predefined language list of the electronic device, at least one language which is associated with the geographic location information; and select one of the at least one language as a setting result for a language option of the electronic device.

The technical solutions provided in the embodiments of the disclosure may include the following beneficial effects. By obtaining current geographic location information of an electronic device, extracting at least one language which is associated with the geographic location information from a predefined language list, and inserting the at least one language into a specified position in the predefined language list, the electronic device can directly provide the at least one language to a subsequent user when setting a language option, enabling the user to obtain the at least one language associated with the current geographic location information without scrolling up and down to search the language list, and select one of the at least one language as a setting result for the language option of the electronic device, which provides convenience for setting languages by the user, solves a problem that the user has to scroll the language list up and down to find a language associated with the current geographic location information, and thus achieving an effect that improves the efficiency for setting the language option of the electronic device.

In addition, by displaying, on a current interface of the electronic device, the at least one language which is in the specified position; receiving language setting information and selecting a language indicated therein as a setting result for the language option of the electronic device, the electronic device may display the at least one language which is associated with the current geographic location information. Due to a great probability for the at least one language being set as the setting result for the language option, the probability for the user to select a language from the displayed at least one language as the setting result for the language option is greater, which improves the efficiency for setting the language option.

In addition, by ranking at least one language in each region by popularity; and inserting the ranked at least one language into the specified position in the predefined language list, the technical solution described herein enables the user to directly select a language with high popularity according to the rank, since the probability for the user to select a language with high popularity is greater, which solves a problem that the user has to find a language from the at least one language, and thus improving the efficiency for setting the language option of the electronic device.

In addition, by obtaining geographic location information previously obtained and restoring at least one language, which is associated with the previously obtained geographic location information, from the specified position to a respective original position, to obtain the predefined language list; or reading the predefined language list which is pre-stored in the electronic device and remains unchanged, the technical solution described herein enables that except a position of at least one language associated with the present setting result is changed, the remaining languages are in respective original positions and remain unchanged. If the user has no need to select one of the at least one language, but needs to select a language from other positions, it may ensure the user can immediately locate the original position of the language and thus find the language quickly. The technical solution solves a problem that ranking the at least one language which is associated with the present setting result in the specified position and ranking at least one language which is associated with the previous setting result in a position adjacent to the specified position will result in unfixed positions of other languages, which is not convenient for the user to search, and thus achieves such an effect that improves the efficiency for searching languages.

In addition, when the electronic device is booted for the first time, it may determine at least one language which is associated with current geographic location information of the electronic device, and selecting one of the at least one language as a default language of the electronic device, which solves such a problem that in a situation that the electronic device sets a language in a first region as the default language and is exported from the first region to a second region, since a language in the second region is different with that in the first region, a user from the second region is unable to understand the language in the first region, resulting in unavailability of the electronic device, thus improving a probability for normal use of the electronic device.

It is to be understood that the forgoing general description and the following detailed description are illustrative only, and are not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1A is a flow diagram illustrating a method for language settings according to an exemplary embodiment.
Fig. 1B is a flow diagram illustrating another method for language settings according to another exemplary embodiment.
Fig. 2A is a flow diagram illustrating a method for language settings according to another exemplary embodiment.
Fig. 2B shows a schematic diagram for determining a setting result for a region option according to an exemplary embodiment.
Fig. 2C shows a schematic diagram for providing a language option according to an exemplary embodiment.
Fig. 2D shows a schematic diagram for displaying at least one language according to an exemplary embodiment.
Fig. 2E shows a schematic diagram for determining a setting result for a language option according to an exemplary embodiment.
Fig. 2F is a flow diagram illustrating a method for language settings according to another exemplary embodiment.
Fig. 2G is a flow diagram illustrating a method for language settings according to another exemplary embodiment.
Fig. 2H is a flow diagram illustrating a method for language settings according to another exemplary embodiment.
Fig. 3A is a block diagram illustrating a device for language settings according to an exemplary embodiment.
Fig. 3B is a block diagram illustrating a device for language settings according to another exemplary embodiment.
Fig. 4A is a block diagram illustrating a device for language settings according to an exemplary embodiment.
Fig. 4B is a block diagram illustrating a device for language settings according to another exemplary embodiment.
Fig. 5 is a block diagram illustrating a device for language settings according to an exemplary embodiment.

### DETAILED DESCRIPTION

Reference will now be made in detail to example embodiments, examples of which are illustrated in the accompanying drawings. The following description refers to the accompanying drawings in which same numbers in different drawings represent same or similar elements unless otherwise described. The implementations set forth in the following description of example embodiments do not represent all implementations consistent with the present disclosure. Instead, they are merely examples of devices and methods consistent with aspects related to the present disclosure as recited in the appended claims.

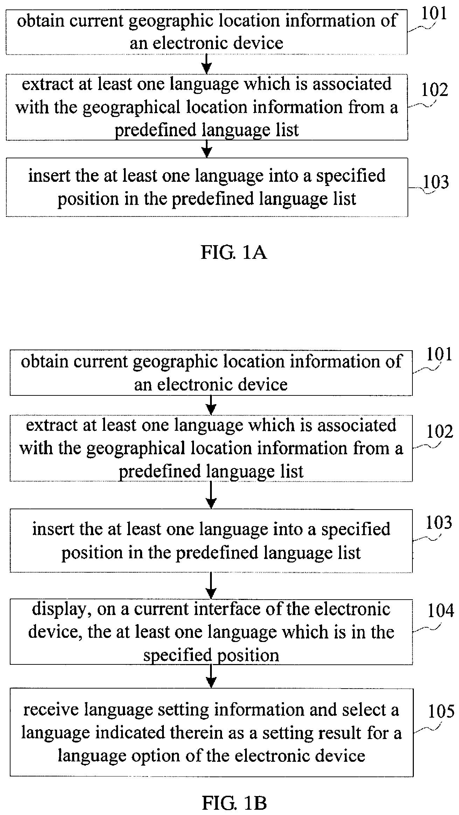

Fig. 1A is a flow diagram illustrating a method for language settings, implemented by an electronic device, according to an exemplary embodiment. As shown in Fig. 1A, the method for language settings includes the following steps.

In step 101, current geographic location information of the electronic device is obtained.

In step 102, at least one language which is associated with the geographic location information is extracted from a predefined language list. In a particular example, a plurality of languages are extracted from the predefined language list in step 102.

In step 103, the at least one language is inserted into a specified (or predetermined) position in the predefined language list. In a particular example, the specified position is the first (or uppermost) position of the predefined language list, thereby facilitating selection by a user.

By obtaining the current geographic location information of the electronic device, extracting at least one language which is associated with the geographic location information from the predefined language list, and inserting the at least one language into the specified position in the predefined language list, the method for language settings provided in the present disclosure enables the electronic device to directly provide the at least one language to a user when setting a language option, so that the user can search the language list to obtain the at least one language associated with the current geographic location information without scrolling the language list up and down, and directly select one of the at least one language as a setting result for the language option of the electronic device. The method for language settings provided in the present disclosure can solve a problem that the user has to search the language list for a language which is associated with the geographic location information by scrolling it up and down after setting a region option, and thus achieving an effect that improves the efficiency for setting the language option of the electronic device.

The specified position may be defined in a suitable manner to facilitate identification and selection of the appropriate language by the user.

Reference is made to a flow diagram shown in Fig. 1B illustrating a method for language settings implemented by the electronic device according to a particular embodiment. As shown in Fig. 1B, subsequent to step 103, the method may further include the following steps.

In step 104, the at least one language which is in the specified position is displayed on a (current) interface of the electronic device.

In step 105, language setting information is received, and a language indicated in the language setting information is selected as a setting result for a language option of the electronic device.

To sum up, by displaying, on a current interface of the electronic device, the at least one language which is in the specified position, receiving language setting information, and selecting a language indicated therein as a setting result for a language option of the electronic device, the method for language settings provided in the present disclosure can display the at least one language which is associated with the current geographic location information. Due to a great probability for the at least one language being selected as the setting result for the language option, the probability for the user to select a language from the displayed at least one language as the setting result for the language option is greater, thus improving the efficiency for setting the language option.

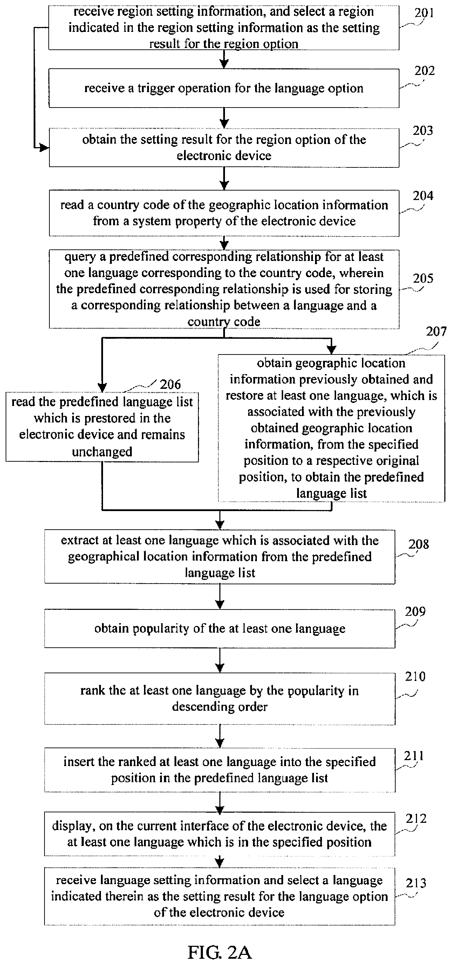

In a first implementation, the current geographic location information of the electronic device is the setting result obtained after the region option is set by the user. Referring to Fig. 2A, a flow diagram illustrates a method for language settings according to another exemplary embodiment, wherein as an example, the method for language settings is applied in an electronic device. As shown in Fig. 2A, the method for language settings includes the following steps.

In step 201, region setting information is received, and a region indicated in the region setting information is selected as a setting result for a region option.

In the related technologies, if a user needs to modify a language option of an electronic device, the electronic device may display a plurality of languages provided as a predefined language list on a current interface. Since there are many languages provided in the electronic device, the user has to search the predefined language list by scrolling up and down for a language needed to be set, resulting in low efficiency for setting the language option.

In the embodiment, the electronic device associates a language with a region. The user may first set the region through the region option. The electronic device may display languages corresponding to the region on the current interface. Then, the user can find a language needed from the displayed languages without scrolling the language list up and down, thus improving the efficiency for setting the language option.

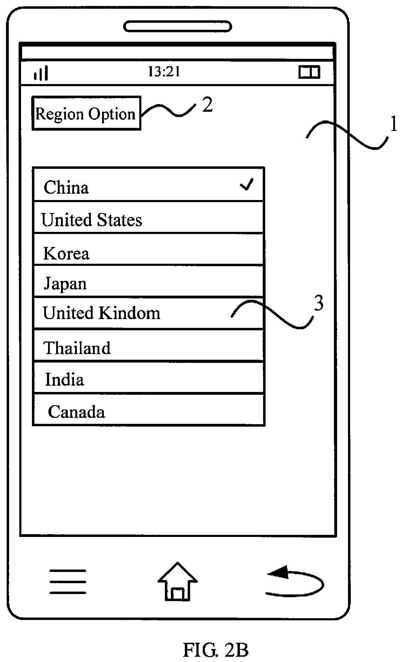

According to the method provided in the embodiment, the electronic device first needs to receive region setting information triggered by the user, and select the region indicated in the region setting information as the setting result for the region option. For example, as shown in Fig. 2B, a display interface 1 of the electronic device provides a region option 2. After region option 2 is triggered by the user, region list 3 will be presented. The user selects "China" in the region list, and the electronic device selects China as the setting result for region option 2.

After setting the region option, the electronic device also needs to set a language option. At this point, the electronic device may directly perform step 203. In other words, after setting the region option, the electronic device will automatically modify the predefined language list according to the region without the user's trigger operation, which may reduce operations performed by the user during the process of setting the language option, and thus improve the efficiency for setting the language option. In a particular embodiment, the electronic device may perform step 202. In this case, the user needs to manually trigger the electronic device to display the language option. Upon the reception of the trigger operation, the electronic device will modify the predefined language list according to the region. It may avoid a waste of resources caused by automatically modifying the predefined language list in such a situation that the user only needs to set the region option without the need to set the language option, thus achieving an effect of saving resources.

In step 202, the trigger operation for the language option is received.

The user manually triggers the language option provided by the electronic device, which will trigger the electronic device to modify the predefined language list for the user to set languages. Then, the electronic device receives the trigger operation.

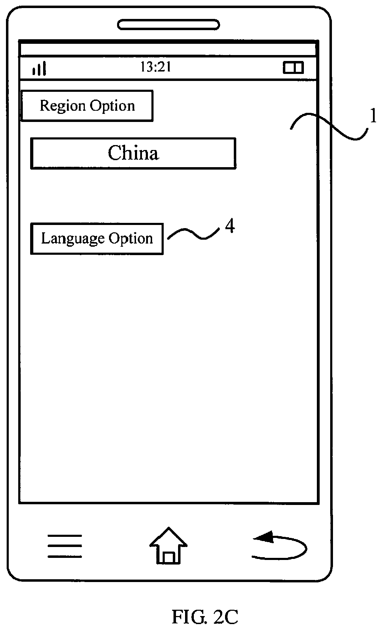

For example, as shown in Fig. 2C, a display interface 1 of the electronic device provides a language option 4. The user triggers the language option 4, and then the electronic device modifies the predefined language list.

In step 203, the setting result for the region option of the electronic device is obtained.

In a particular embodiment, the setting result for the region option obtained by the electronic device is the current geographic location information of the electronic device.

In step 204, a country code of the setting result is read from a system property of the electronic device. Various system properties may be contemplated within the present disclosure. For mobile phone or the like, the system properties may be Android System Properties, Linux System Properties, IOS System Properties etc. For example, Android system may directly calls System Properties (SystemProperties) class locally to achieve the creation, acquisition and modification of system properties. Android system properties class is in android.os, the path of System Properties is as follow: /frameworks/base/core/java/android/os/SystemProperties.java.

To facilitate the user to select a language which is associated with the setting result for the region option, the electronic device may associate languages with the setting result in advance. When implemented, the country code of the setting result may associate with language. In this case, the electronic device needs to first determine the country code according to the setting result. A country code is used to uniquely identify a region. For example, the country code for China is 86.

The system property of the electronic device contains the country code of the setting result. After setting the region option, the electronic device will accordingly modify the country code in the system property to the country code corresponding to the present setting result. Thus, the electronic device can directly read the country code of setting result from the system property.

For example, the electronic device may read the country code of setting result from the system property of "ro.miui.region".

In step 205, it may query a predefined corresponding relationship for at least one language corresponding to the country code, wherein the predefined corresponding relationship is used for storing a corresponding relationship between a language and a country code.

The electronic device stores the predefined corresponding relationship between a country code and at least one language corresponding to the country code. After reading the country code, it may obtain at least one language corresponding to the country code by querying the predefined corresponding relationship.

For example, a predefined corresponding relationship is shown in table 1 below. If the setting result for the region option of the electronic device is China, it may obtain the country code for China (i.e., 86) by reading the system property, and the corresponding languages are simplified Chinese and traditional Chinese.

**Table 1**

| Setting Result | Country Code | Language |
|---|---|---|
| China | 86 | simplified Chinese/ traditional Chinese |
| Canada | 124 | English/ French/ Indian |
| ...... | ...... | ...... |

In step 206, it may read the predefined language list which is pre-stored in the electronic device and remains unchanged.

The electronic device pre-stores the predefined language list which contains languages corresponding to at least two regions, and ranking positions of languages in the predefined language list remain unchanged. The positions of languages in the predefined language list may be ranked by popularity, order of initial letters of language names, or length of language names of each of the languages. The embodiments of the present disclosure are not limited in this respect.

For example, a predefined language list stored in an electronic device is shown in table 2 below.

**Table 2**

| |
|---|
| English |
| Simplified Chinese |
| French |
| Traditional Chinese |
| Korean |
| Japanese |
| Arabic |
| ...... |

As an alternative solution for step 206, in step 207, it may obtain a previous setting result for the region option, and restore at least one language, which is associated with the previous setting result, from a specified position to a respective original position, to obtain the predefined language list. In other words, the previous setting result is geographic location information previously obtained by the electronic device.

If it is not the first time for the user to set the language option, when obtaining the predefined language list, the electronic device may restore at least one language which is associated with the previous setting result for the language option to an original position to obtain an original predefined language list.

Given that the previous setting result is China with simplified Chinese ranked in a first place in the predefined language list, and the original predefined language list is shown as in table 2, it may restore simplified Chinese from the first place to a second place, and traditional Chinese from the second place to a fourth place.

Steps 206 and 207 need to be performed before step 208. However, the embodiments of the present disclosure do not limit to a particular sequence of steps 206, 207 and other steps.

In step 208, it may extract at least one language which is associated with the setting result from the predefined language list.

The predefined language list contains at least one language corresponding to each of regions. Since it may obtain at least one language corresponding to the setting result, the electronic device may directly extract the at least one language from the predefined language list.

In step 209, it may obtain popularity of the at least one language.

The popularity of language may represent a probability for the user to select the language as the setting result for the language option. The popularity is positively correlated with the probability. In other words, the higher the popularity is, the greater the probability for the user to select a language as the setting result for the language option it will be.

The popularity of language can be obtained by statistically analyzing setting results for the language option from a plurality of users. The embodiments of the present disclosure are not limited in this respect.

In step 210, it may rank the at least one language by the popularity in descending order.

In step 211, it may insert the ranked at least one language into the specified position in the predefined language list.

Since a language with high popularity may have greater probability to be selected by the user, the user may directly select the language with high popularity according to the order. The technical solution described in the embodiments solves a problem that the user has to search at least one language for a language, and thus achieves such an effect that improves the efficiency for setting the language option of the electronic device.

The specified position refers to a positon which can be displayed on the current interface. For example, if the electronic device displays the predefined language list from front to back, the specified position may be the top n places in the predefined language list, wherein n is a positive integer. If the electronic device displays the predefined language list in a roller manner, the specified position may be a position at the center of the roller.

In step 212, it may display, on the current interface of the electronic device, the at least one language which is in the specified position.

In one possible implementation, the electronic device may display an operation widget of the predefined language list on the interface. The user may trigger the operation widget by manual. After receiving the trigger operation, the electronic device will display, on the current interface, the at least one language which is in the specified position for the user to select.

In another possible implementation, after setting the region information, the electronic device will automatically display, on its current interface, the at least one language which is in the specified position for the user to select, without the user's trigger operation, which may reduce operations performed by the user during the process of setting the language option, and thus improve the efficiency for setting the language option.

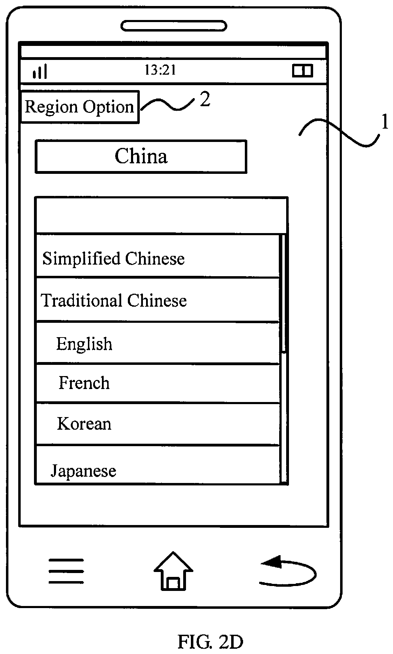

For example, as shown in Fig. 2D, if determining that the setting result for the region option is China, the electronic device will display simplified Chinese and traditional Chinese in the top two places on its current interface by popularity in descending order. Fig. 2D takes display interface 1 as an example of the display interface which displays the setting result for the region option. When implemented in practice, the electronic device may jump to a new display interface to display the predefined language list after the determination of the setting result for the region option. The embodiments of the present disclosure are not limited in this respect.

In step 213, it may receive language setting information, and select a language indicated in therein as the setting result for the language option of the electronic device.

The user may select one of the at least one language displayed on the current interface. Then, the electronic device may receive the language setting information triggered by the user, and select the language indicated therein as the setting result for the language option.

In a particular embodiment, if the user has no need to select one of the at least one language, the user may also select a language in other positions in the predefined language list. Then, the electronic device may receive the language setting information triggered by the user, and select the language indicated therein as the setting result for the language option.

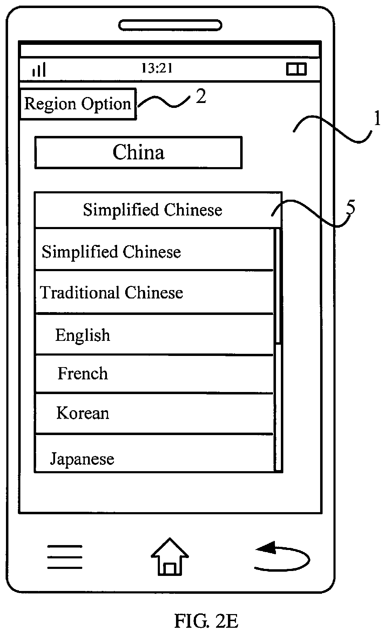

For example, as shown in Fig. 2E, there are a plurality of languages provided in display interface 1 of the electronic device. The user selects simplified Chinese from the plurality of languages. Then, the electronic device selects simplified Chinese as the setting result for language option 5.

In the embodiment, except a position of at least one language which is associated with the present setting result is changed, the remaining languages are in respective original positions and remain unchanged. If the user has no need to select one of the at least one language, but needs to select a language from other positions, it may ensure the user can immediately locate the original position of the language and thus find the language quickly. The technical solution described in the embodiments solves a problem that ranking the at least one language which is associated with the present setting result in the specified position and ranking at least one language which is associated with the previous setting result in a position adjacent to the specified position will result in unfixed positions of other languages, which is not convenient for the user to search, and thus achieves such an effect that improves the efficiency for searching languages.

To sum up, by obtaining the setting result for the region option of the electronic device; extracting at least one language which is associated with the setting result from the predefined language list; and inserting the at least one language into the specified position in the predefined language list, the method for language settings provided in the present disclosure may enable the electronic device to directly provide the at least one language to a subsequent user when setting a language option, so that the user can obtain the at least one language associated with the present region without scrolling up and down to search the language list, and directly select one of the at least one language as the setting result for the language option of the electronic device. The method can solve a problem that the user has to scroll the language list up and down to find a language associated with the present region after setting the region option, and thus achieving an effect that improves the efficiency for setting the language option of the electronic device.

In addition, by displaying, on the current interface of the electronic device, the at least one language which is in the specified position; receiving language setting information; and selecting a language indicated therein as a setting result for the language option of the electronic device, the electronic device may display the at least one language associated with the present region. Due to a great probability for the at least one language being set as the setting result for the language option, the probability for the user to select a language from the displayed at least one language as the setting result for the language option will be greater, which improves the efficiency for setting the language option.

In addition, by ranking at least one language in each region by popularity; and inserting the ranked at least one language into the specified position in the predefined language list, the technical solution described herein enables the user to directly select a language with high popularity according to the rank, since the probability for the user to select a language with high popularity is greater, which solves a problem that the user has to find a language from the at least one language, and thus achieving an effect that improves the efficiency for setting the language option of the electronic device.

In addition, by obtaining the previous setting result for the region option, and restoring at least one language, which is associated with the previous setting result, from the specified position to a respective original position, to obtain the predefined language list; or reading the predefined language list which is pre-stored in the electronic device and remains unchanged, the technical solution described herein enables that except a position of at least one language associated with the present setting result is changed, the remaining languages are in respective original positions and remain unchanged. If the user has no need to select one of the at least one language, but needs to select a language from other positions, it may ensure the user can immediately locate the original position of the language and thus find the language quickly. The technical solution solves a problem that ranking the at least one language which is associated with the present setting result in the specified position and ranking at least one language which is associated with the previous setting result in a position adjacent to the specified position will result in unfixed positions of other languages, which is not convenient for the user to search for a language, and thus achieving such an effect that improves the efficiency for searching languages.

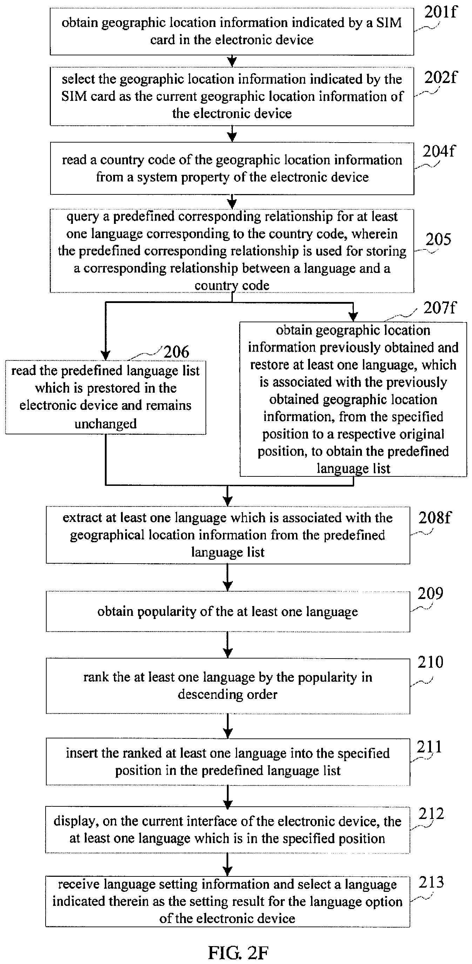

In a second implementation, the current geographic location information of the electronic device is determined by a SIM card in the electronic device. In this case, steps 201-203 can be substituted for the following steps 201f and 202f. Referring to Fig. 2F, which is a flow diagram illustrating a method for language settings according to another exemplary embodiment. As shown in Fig. 2F, the method for language settings includes the following steps.

In step 201f, it may obtain geographic location information indicated by a subscriber identification module (SIM) card in the electronic device.

In step 202f, it may select the geographic location information indicated by the SIM card as the current geographic location information of the electronic device.

In the case that the electronic device obtains the current geographic location information by obtaining the geographic location information indicated by the SIM card, the electronic device may read IMSI (International Mobile Subscriber Identification Number) indicated in a predefined field in the SIM card, and determine the current geographic location information based on the IMSI. Herein, the IMSI includes at least a MCC (Mobile Country Code), which consists of a three-digit numbers and is used to uniquely identify a country where the SIM card belongs to. For example, if MCC is 460, it indicates that the country, where the SIM card belongs to, is China.

In this case, in step 204f, as an alternative step for step 204, it may read a country code of the geographic location information from a system property of the electronic device.

In step 207f, as an alternative step for step 207, it may obtain geographic location information previously obtained and restore at least one language, which is associated with the previously obtained geographic location information, from the specified position to a respective original position, to obtain the predefined language list.

In step 208f, as an alternative step for step 208, it may extract at least one language which is associated with the geographic location information from the predefined language list.

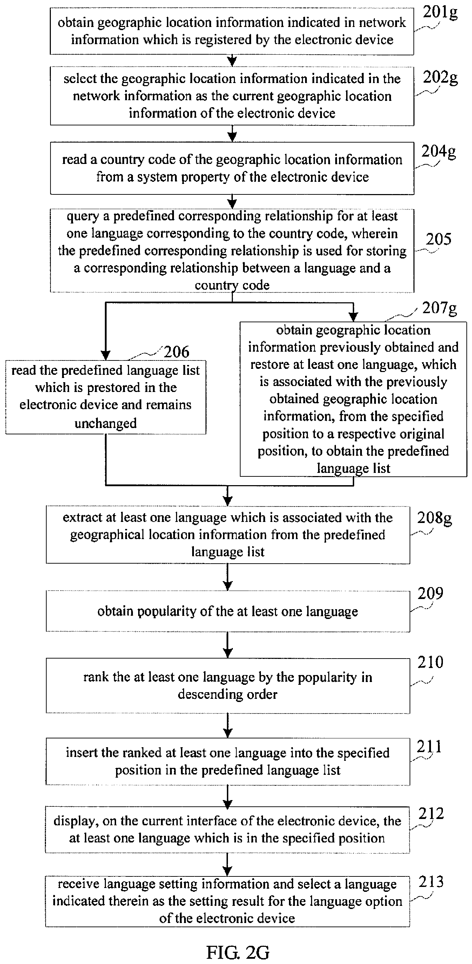

In a third implementation, the current geographic location information of the electronic device is determined based on network information which is registered by the electronic device. In this case, steps 201-203 can be substituted for the following steps 201g and 202g. Referring to Fig. 2G, which is a flow diagram illustrating a method for language settings according to another exemplary embodiment. As shown in Fig. 2G, the method for language settings includes the following steps.

In step 201g, it may obtain geographic location information indicated in network information which is registered by the electronic device.

In step 202g, it may select the geographic location information indicated in the network information as the current geographic location information of the electronic device.

In the case that the electronic device obtains the current geographic location information by obtaining the geographic location information indicated in network information which is registered by the electronic device, the electronic device may receive network information carrying an IMSI broadcast by a base station; read the IMSI in the network information; and determine the current geographic location information of the electronic device based on the IMSI. A description related to the IMSI has been discussed in embodiments illustrated in Fig. 2F and will not be repeated herein.

In this case, in step 204g, as an alternative step for step 204, it may read a country code of the geographic location information from a system property of the electronic device.

In step 207g, as an alternative step for step 207, it may obtain geographic location information previously obtained and restore at least one language, which is associated with the previously obtained geographic location information, from the specified position to a respective original position, to obtain the predefined language list.

In step 208g, as an alternative step for step 208, it may extract at least one language which is associated with the geographic location information from the predefined language list.

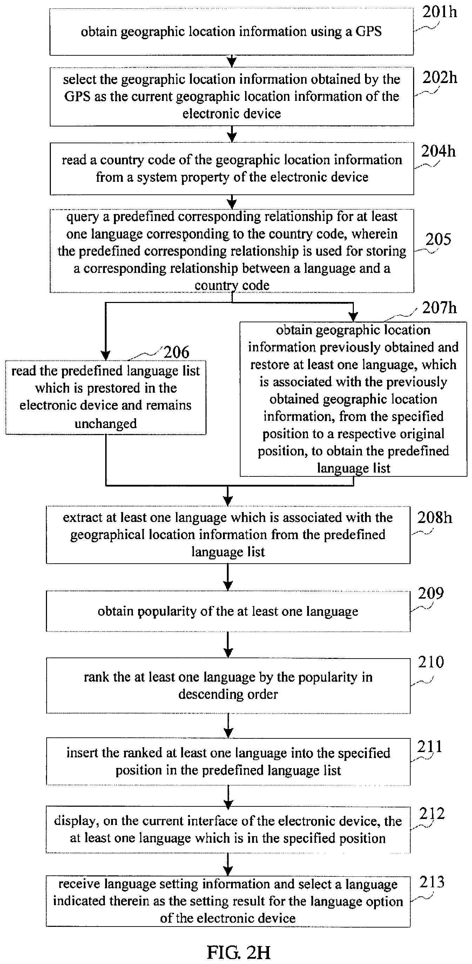

In a fourth implementation, the current geographic location information of the electronic device is determined based on a GPS. In this case, steps 201-203 can be substituted for the following steps 201h and 202h. Referring to Fig. 2H, which is a flow diagram illustrating a method for language settings according to another exemplary embodiment. As shown in Fig. 2H, the method for language settings includes the following steps.

In step 201h, it may obtain geographic location information using the GPS.

In step 202h, it may select the geographic location information obtained by the GPS as the current geographic location information of the electronic device.

In the case that the electronic device obtains the current geographic location information using the GPS, the electronic device may calculate current latitude and longitude information of the electronic device based on a GPS signal received by a GPS receiver in the electronic device, and determine the current geographic location information of the electronic device based on the calculated latitude and longitude information.

In this case, in step 204h, as an alternative step for step 204, it may read a country code of the geographic location information from a system property of the electronic device.

In step 207h, as an alternative step for step 207, it may obtain geographic location information previously obtained and restore at least one language, which is associated with the previously obtained geographic location information, from the specified position to a respective original position, to obtain the predefined language list.

In step 208h, as an alternative step for step 208, it may extract at least one language which is associated with the geographic location information from the predefined language list.

In a particular embodiment, in a situation that the electronic device is exported from a first region to a second region, and a language in the first region is different with that of the second region, if the electronic device sets the language in the first region as a default language, then a user from the second region may be unable to understand the language in the first region, resulting in unavailability of the electronic device. Thus, the electronic device may obtain current geographic location information when it is booted for the first time. After obtaining the current geographic location information, the electronic device may extract at least one language which is associated with the geographic location information from the predefined language list, insert the at least one language into the specified position of the predefined language list, and select one of the at least one language which is associated with the geographic location information as the setting result for the language option of the electronic device, so that the language is selected as the default language of the electronic device, which improves a probability for normal use of the electronic device. The electronic device may obtain the current geographic location information in the way illustrated in steps 201-203 in Fig. 2A, or in the way illustrated in steps 201g-202g in Fig. 2G, or in the way illustrated in steps 201h-202h in Fig. 2H. The embodiments of the present disclosure are not limited in this respect.

Herein, when the electronic device selects one of the at least one language as the setting result for the language option, it may select any of the at least one language based on a randomized algorithm; or it may select a language with highest popularity based on popularity of the at least one language; or it may select a language ranked in the top based on the arrangement of initial letters of the at least one language. The embodiments of the present disclosure are not limited in the way to select one of the at least one language.

In a particular embodiment, when the electronic device is booted for the first time and after geographic location information has been obtained, it may directly determine at least one language associated with the geographic location information from the predefined language list of the electronic device, and select one of the at least one language as the setting result for the language option of the electronic device, so that the language is selected as a default language of the electronic device, which improves a probability for normal use of the electronic device. The current geographic location information of the electronic device may be obtained in the way illustrated in steps 201-203 in Fig. 2A, or in the way illustrated in steps 201f-202f in Fig. 2F, or in the way illustrated in steps 201g-202g in Fig. 2G, or in the way illustrated in steps 201h-202h in Fig. 2H. The embodiments of the present disclosure are not limited in this respect.

When the electronic device selects one of the at least one language as the setting result for the language option, it may select any of the at least one language based on a randomized algorithm; or it may select a language with highest popularity based on popularity of the at least one language; or it may select a language ranked in the top based on the arrangement of initial letters of the at least one language. The embodiments of the present disclosure are not limited in the way to select one of the at least one language.

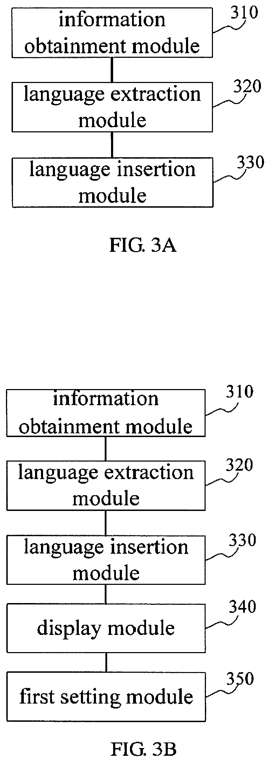

Fig. 3A is a block diagram illustrating a device for language settings according to an exemplary embodiment, which is applied in an electronic device. As shown in Fig. 3A, the device for language settings includes an information obtainment module 310, a language extraction module 320 and a language insertion module 330.

The information obtainment module 310 is configured to obtain current geographic location information of the electronic device.

The language extraction module 320 is configured to extract at least one language from a predefined language list, wherein the at least one language is associated with the geographic location information obtained by the information obtainment module 310.

The language insertion module 330 is configured to insert the at least one language which is extracted by the language extraction module 320 into a specified position in the predefined language list.

To sum up, by obtaining the current geographic location information of the electronic device, extracting at least one language which is associated with the geographic location information from the predefined language list, and inserting the at least one language into the specified position in the predefined language list, the device for language settings provided in the present disclosure can directly provide the at least one language to a subsequent user when setting a language option, so that the user can search the language list to obtain the at least one language which is associated with the current geographic location information without scrolling the language list up and down, and directly select one of the at least one language as the setting result for the language option of the electronic device. The technical solution described herein can solve a problem that the user has to search the language list for a language which is associated with the geographic location information by scrolling it up and down after setting a region option, and thus achieving an effect that improves the efficiency for setting the language option of the electronic device.

In a particular embodiment, referring to Fig. 3B, which is a block diagram illustrating a device for language settings. As shown in Fig. 3B, the device may further include a display module 340 and a first setting module 350.

The display module 340 is configured to display, on a current interface of the electronic device, the at least one language in the specified position determined by the language insertion module 330.

The first setting module 350 is configured to receive language setting information, and select a language indicated in the language setting information as a setting result for a language option of the electronic device.

To sum up, by displaying, on the current interface of the electronic device, the at least one language which is in the specified position; receiving language setting information; and selecting a language indicated therein as the setting result for the language option of the electronic device, the device for language settings provided in the embodiments of the present disclosure may display the at least one language which is associated with the current geographic location information. Due to a great probability for the at least one language being set as the setting result for the language option, the probability for the user to select a language from the displayed at least one language as the setting result for the language option is greater, which improves the efficiency for setting the language option.

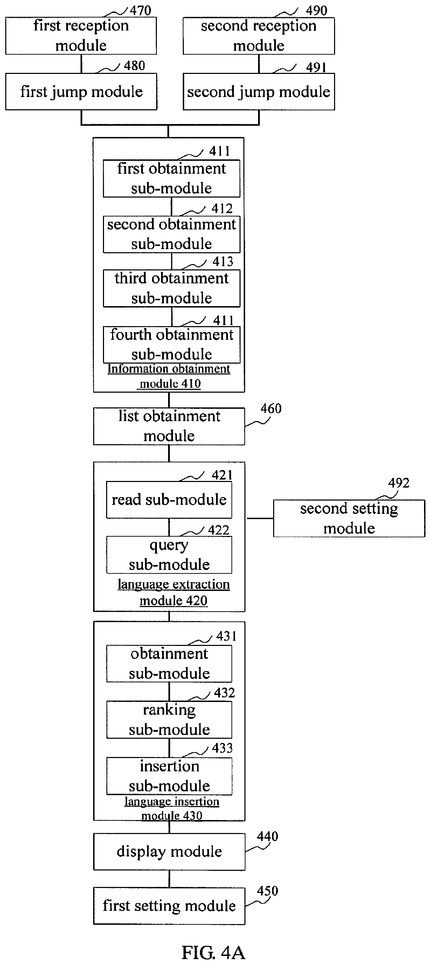

Fig. 4A is a block diagram illustrating a device for language settings according to an exemplary embodiment, which is applied in an electronic device. As shown in Fig. 4A, the device for language settings includes an information obtainment module 410, a language extraction module 420 and a language insertion module 430.

The information obtainment module 410 is configured to obtain current geographic location information of the electronic device.

The language extraction module 420 is configured to extract at least one language from a predefined language list, wherein the at least one language is associated with the geographic location information obtained by the information obtainment module 410.

The language insertion module 430 is configured to insert the at least one language which is extracted by the language extraction module 420 into a specified position in the predefined language list.

In a particular embodiment, the device may further include a display module 440 and a first setting module 450.

The display module 440 is configured to display, on a current interface of the electronic device, the at least one language in the specified position determined by the language insertion module 430.

The first setting module 450 is configured to receive language setting information, and select a language indicated in the language setting information as a setting result for a language option of the electronic device.

In a particular embodiment, the language insertion module 430 may include an obtainment sub-module 431, a ranking sub-module 432 and an insertion sub-module 433.

The obtainment sub-module 431 is configured to obtain popularity of the at least one language.

The ranking sub-module 432 is configured to rank the at least one language by the popularity obtained by the obtainment sub-module 431 in descending order.

The insertion sub-module 433 is configured to insert the at least one language, which is ranked by the ranking sub-module 432, into the specified position in the predefined language list.

In a particular embodiment, the device may further include a list obtainment module 460.

The list obtainment module 460 is configured to obtain geographic location information previously obtained and restore the at least one language, which is associated with the geographic location information previously obtained, from the specified position to a respective original position, to obtain the predefined language list; or read the predefined language list which is pre-stored in the electronic device and remains unchanged.

In a particular embodiment, the language extraction module 420 may include a read sub-module 421 and a query sub-module 422.

The read sub-module 421 is configured to read a country code of the geographic location information from a system property of the electronic device.

The query sub-module 422 is configured to query a predefined corresponding relationship for the at least one language corresponding to the country code read by the read sub-module 421, wherein the predefined corresponding relationship is used for storing a corresponding relationship between a country code and a language.

In a particular embodiment, the information obtainment module 410 may include a first obtainment sub-module 411, a second obtainment sub-module 412, a third obtainment sub-module 413 and a fourth obtainment sub-module 414.

The first obtainment sub-module 411 is configured to obtain a setting result for a region option of the electronic device, and select geographic location information indicated in the setting result as the current geographic location information of the electronic device.

In a particular embodiment, the second obtainment sub-module 412 is configured to obtain geographic location information indicated by a subscriber identification module (SIM) card in the electronic device, and select the geographic location information indicated by the SIM card as the current geographic location information of the electronic device.

In a particular embodiment, the third obtainment sub-module 413 is configured to obtain geographic location information indicated in network information which is registered by the electronic device, and select the geographic location information indicated in the network information as the current geographic location information of the electronic device.

In a particular embodiment, the fourth obtainment sub-module 414 is configured to obtain geographic location information using a global positioning system (GPS), and select the geographic location information obtained by the GPS as the current geographic location information of the electronic device.

In a particular embodiment, if the current geographic location information of the electronic device is the setting result for the region option of the electronic device, the device may further include a first reception module 470 and a first jump module 480.

The first reception module 470 is configured to receive region setting information, and select a region indicated in the region setting information as the setting result for the region option.

The first jump module 480 is configured to trigger the information obtainment module to obtain the current geographic location information of the electronic device.

In a particular embodiment, if the current geographic location information of the electronic device is the setting result for the region option of the electronic device, the device may further include a second reception module 490 and a second jump module 491.

The second reception module 490 is configured to receive region setting information, and select a region indicated in the region setting information as the setting result for the region option.

The second jump module 491 is configured to receive a trigger operation for a language option, and trigger the information obtainment module 410 to obtain the current geographic location information of the electronic device according to the trigger operation.

In a particular embodiment, the device may further include a second setting module 492.

The second setting module 492 is configured to select one of the at least one language as the setting result for the language option of the electronic device when it is booted for the first time.

To sum up, by obtaining current geographic location information of the electronic device, extracting at least one language which is associated with the geographic location information from the predefined language list, and inserting the at least one language into the specified position in the predefined language list, the device for language settings provided in the present disclosure enables the electronic device to directly provide the at least one language to a subsequent user when setting a language option, so that the user can obtain the at least one language associated with the current geographic location information without scrolling up and down to search the language list, and select one of the at least one language as a setting result for the language option of the electronic device, which solves a problem that the user has to scroll the language list up and down to find a language associated with the current geographic location information, and thus achieving an effect that improves the efficiency for setting the language option of the electronic device.

In addition, by displaying, on the current interface of the electronic device, the at least one language which is in the specified position; receiving language setting information; and selecting a language indicated therein as a setting result for the language option of the electronic device, the electronic device may display the at least one language which is associated with the current geographic location information. Due to a great probability for the at least one language being set as the setting result for the language option, the probability for the user to select a language from the displayed at least one language as the setting result for the language option is greater, which improves the efficiency for setting the language option.

In addition, by ranking at least one language in each region by popularity and inserting the ranked at least one language into the specified position in the predefined language list, the technical solution described herein enables the user to directly select a language with high popularity according to the rank, since the probability for the user to select a language with high popularity is greater, which solves a problem that the user has to find a language from the at least one language, and thus improving the efficiency for setting the language option of the electronic device.

In addition, by obtaining geographic location information previously obtained and restoring at least one language, which is associated with the previously obtained geographic location information, from the specified position to a respective original position, to obtain the predefined language list; or reading the predefined language list which is pre-stored in the electronic device and remains unchanged, the technical solution described herein enables that except a position of at least one language associated with the present setting result is changed, the remaining languages are in respective original positions and remain unchanged. If the user has no need to select one of the at least one language, but needs to select a language from other positions, it may ensure the user can immediately locate the original position of the language and thus find the language quickly. The technical solution solves a problem that ranking the at least one language which is associated with the present setting result in the specified position and ranking at least one language which is associated with the previous setting result in a position adjacent to the specified position will result in unfixed positions of other languages, which is not convenient for the user to search, and thus achieving such an effect that improves the efficiency for searching languages.

In addition, when the electronic device is booted for the first time, it may determine at least one language which is associated with current geographic location information of the electronic device, and select one of the at least one language as a default language of the electronic device, which solves such a problem that in a situation that the electronic device sets a language in a first region as the default language and is exported from the first region to a second region, since a language in the second region is different with that in the first region, a user from the second region may be unable to understand the language in the first region, resulting in unavailability of the electronic device, and thus improving a probability for normal use of the electronic device.

With respect to the device provided in the embodiments described above, implementations for performing operations by each of modules have been discussed in detail in the embodiments with respect to the method, and will not be repeated herein.

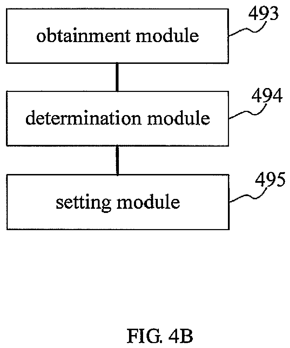

Fig. 4B is a block diagram illustrating a device for language settings according to another exemplary embodiment, which is applied in an electronic device. As shown in Fig. 4B, the device for language settings includes an obtainment module 493, a determination module 494 and a setting module 495.

The obtainment module 493 is configured to obtain current geographic location information of the electronic device when it is booted for the first time.

The determination module 494 is configured to determine, from a predefined language list of the electronic device, at least one language which is associated with the geographic location information obtained by the obtainment module 493.

The setting module 495 is configured to select one of the at least one language determined by the determination module 494, as a setting result for a language option of the electronic device.

An exemplary embodiment of the present disclosure provides a device for language settings for implementing the method for language settings provided in the present disclosure. The device includes a processor and a memory for storing processor-executable instructions, wherein the processor is configured to obtain current geographic location information of an electronic device; extract, from a predefined language list, at least one language which is associated with the geographic location information; and insert the at least one language into a specified position in the predefined language list.

An exemplary embodiment of the present disclosure provides a device for language settings for implementing the method for language settings provided in the present disclosure. The device includes a processor and a memory for storing processor-executable instructions, wherein the processor is configured to obtain current geographic location information of an electronic device when it is booted for the first time; determine, from a predefined language list of the electronic device, at least one language which is associated with the geographic location information; and select one of the at least one language as a setting result for a language option of the electronic device.

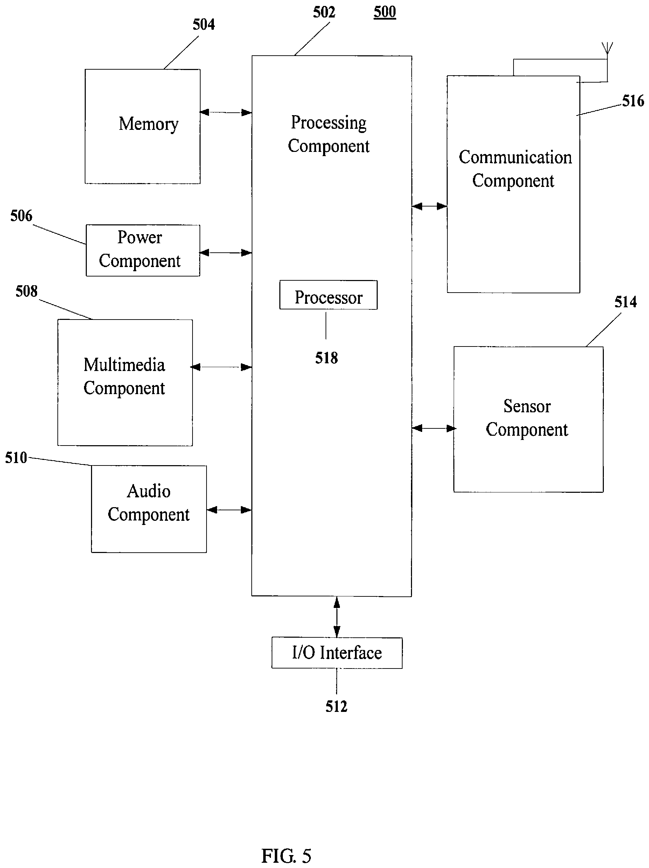

Fig. 5 is a block diagram illustrating a device for language settings according to an exemplary embodiment. For example, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, phone calls, data communications, camera operations and recording operations. The processing component 502 may include one or more processors 518 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contacts data, telephone book data, messages, photos, videos, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 may include a front-facing camera and/or rear camera. When the device 500 is in operation mode, such as in shooting mode or video mode, the front-facing camera and/or rear camera may receive multimedia data from outside. Each of the front-facing camera and the rear camera may be a fixed optical lens system, or focus or optical zoom-enabled.

The audio component 510 is configured to output and/or input audio signals. For example, the audio component 510 includes a microphone ("MIC") configured to receive an external audio signal when the device 500 is in an operation mode, such as a calling mode, a recording mode and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one example embodiment, the communication component 516 receives a broadcast signal or broadcast associated information from an external broadcast management system via a broadcast channel. In one example embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer readable storage medium including instructions, such as the memory 504 including instructions, executable by the processor 518 in the device 500, for performing the above-described methods. For example, the non-transitory computer-readable storage medium may be a ROM, a random access memory (RAM), a CD-ROM, a magnetic tape, a floppy disc, an optical data storage device, and the like.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and embodiments be considered as illustrative only, with a true scope of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A method for language settings, implemented by an electronic device, **characterized in that** the method comprises:
obtaining (101) current geographic location information of the electronic device;
extracting (102) at least one language which is associated with the geographic location information from a predefined language list; and
inserting (103) the at least one language into a specified position in the predefined language list.

2. The method of claim 1, further comprising:
displaying (104), on an interface of the electronic device, the at least one language which is in the specified position; and
receiving (105) language setting information and selecting a language indicated therein as a setting result for a language option of the electronic device.

3. The method of claim 1 or 2, wherein the inserting (103) the at least one language into a specified position in the predefined language list comprises:
obtaining (209) a popularity score of the at least one language;
ranking (210) the at least one language based on the corresponding popularity score in descending order; and
inserting (211) the ranked at least one language into the specified position in the predefined language list.

4. The method of any one of claims 1 to 3, further comprising:
obtaining (207) geographic location information previously obtained, and restoring at least one language, which is associated with the previously obtained geographic location information, from the specified position to a respective original position, to obtain the predefined language list; or
reading (206) the predefined language list which is pre-stored in the electronic device and remains unchanged.

5. The method of any one of claims 1 to 4, wherein the extracting at least one language which is associated with the geographic location information from a predefined language list comprises:
reading (204) a country code of the geographic location information from a system property of the electronic device; and
querying (205) a predefined corresponding relationship for at least one language corresponding to the country code, wherein the predefined corresponding relationship is used for storing a corresponding relationship between a language and a country code.

6. The method of any one of claims 1 to 5, wherein the obtaining (101) current geographic location information of an electronic device comprises:
obtaining (203) a setting result for a region option of the electronic device, and selecting geographic location information indicated in the setting result as the current geographic location information of the electronic device; or
obtaining (201f) geographic location information indicated by a subscriber identification module (SIM) card in the electronic device, and selecting (202f) the geographic location information indicated by the SIM card as the current geographic location information of the electronic device; or
obtaining (201g)geographic location information indicated in network information which is registered by the electronic device, and selecting (202g) the geographic location information indicated in the network information as the current geographic location information of the electronic device; or
obtaining (201h) geographic location information using a global positioning system (GPS), and selecting (202h) the geographic location information obtained by the GPS as the current geographic location information of the electronic device.

7. The method of claim 6, wherein if the current geographic location information of the electronic device is the setting result for the region option of the electronic device, the method further comprising:
receiving region setting information, and selecting a region indicated in the region setting information as the setting result for the region option; and
triggering a performance of obtaining the current geographic location information of the electronic device; or receiving a trigger operation for a language option, and triggering a performance of obtaining the current geographic location information of the electronic device according to the trigger operation.

8. The method of any one of claims 1 to 7, wherein the current geographic location information is obtained when the electronic device is booted for the first time; the method further comprising:
selecting one of the at least one language as the setting result for the language option of the electronic device.

9. An electronic device for language settings, **characterized in that** the device comprises:
an information obtainment module (310) configured to obtain current geographic location information of the electronic device;
a language extraction module (320) configured to extract at least one language from a predefined language list, wherein the at least one language is associated with the geographic location information obtained by the information obtainment module; and
a language insertion module (330) configured to insert the at least one language extracted by the language extraction module into a specified position in the predefined language list.

10. The device of claim 9, further comprising:
a display module (340) configured to display, on a interface of the electronic device, the at least one language in the specified position determined by the language insertion module; and
a first setting module (350) configured to receive language setting information, and select a language indicated in the language setting information as a setting result for a language option of the electronic device.

11. The device of claim 9 or 10, wherein the language insertion module (330) comprises:
an obtainment sub-module (431) configured to obtain a popularity score of the at least one language;
a ranking sub-module (432) configured to rank the at least one language based on the corresponding popularity score, obtained by the obtainment sub-module, in descending order; and
an insertion sub-module (433) configured to insert the at least one language, ranked by the ranking sub-module, into the specified position in the predefined language list.

12. The device of any one of claims 9 to 11, further comprising:
a list obtainment module (460) configured to obtain geographic location information previously obtained and restore the at least one language, which is associated with the geographic location information previously obtained, from the specified position to a respective original position, to obtain the predefined language list; or read the predefined language list which is pre-stored in the electronic device and remains unchanged.

13. The device of any of claims 9 to 12, wherein the language extraction module (320) comprises:
a read sub-module (421) configured to read a country code of the geographic location information from a system property of the electronic device; and
a query sub-module (422) configured to query a predefined corresponding relationship for the at least one language corresponding to the country code read by the read sub-module, wherein the predefined corresponding relationship is used for storing a corresponding relationship between a country code and a language.

14. The device of any of claims 9 to 13, wherein the information obtainment module (310) comprises:
a first obtainment sub-module (411) configured to obtain a setting result for a region option of the electronic device, and select geographic location information indicated in the setting result as the current geographic location information of the electronic device; or
a second obtainment sub-module (412) configured to obtain geographic location information indicated by a subscriber identification module (SIM) card in the electronic device, and select the geographic location information indicated by the SIM card as the current geographic location information of the electronic device; or
a third obtainment sub-module (413) configured to obtain geographic location information indicated in network information which is registered by the electronic device, and select the geographic location information indicated in the network information as the current geographic location information of the electronic device; or
a fourth obtainment sub-module (414) configured to obtain geographic location information using a global positioning system (GPS), and select the geographic location information obtained by the GPS as the current geographic location information of the electronic device.

15. The device of claim 14, wherein if the current geographic location information of the electronic device is the setting result for the region option of the electronic device, the device further comprises:
a first reception module (470) configured to receive region setting information, and select a region indicated in the region setting information as the setting result for the region option; and
a first jump module (480) configured to trigger the information obtainment module to obtain the current geographic location information of the electronic device; or
a second reception module (490) configured to receive region setting information, and select a region indicated in the region setting information as the setting result for the region option; and
a second jump module (491) configured to receive a trigger operation for a language option, and trigger the information obtainment module to obtain the current geographic location information of the electronic device according to the trigger operation.
